(19) 

(11) **EP 4 247 659 B1**

(12) **EUROPEAN PATENT SPECIFICATION**

(45) Date of publication and mention of the grant of the patent: **23.09.2026 Bulletin 2026/39**

(21) Application number: **21810448.7**

(22) Date of filing: **17.11.2021**

(51) International Patent Classification (IPC):
***B60K 15/063*** *(2006.01)* ***B60K 15/067*** *(2006.01)*
***B60K 1/00*** *(2006.01)* ***F16F 7/00*** *(2006.01)*
***B60L 50/71*** *(2019.01)* ***H01M 8/247*** *(2016.01)*

(52) Cooperative Patent Classification (CPC):
**B60K 1/00; B60L 50/71; B60L 50/72;**
B60L 2200/44; B60Y 2200/142; F16F 1/38; F16F 15/04; H01M 2250/20; Y02E 60/50; Y02P 90/60; Y02T 90/40

(86) International application number: **PCT/NL2021/050707**

(87) International publication number: **WO 2022/108446 (27.05.2022 Gazette 2022/21)**

(54) **FUEL CELLS MOUNTING CONCEPT**

BRENNSTOFFZELLEN-MONTAGEKONZEPT

CONCEPT DE MONTAGE DE PILES À COMBUSTIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.11.2020 NL 2026911**

(43) Date of publication of application: **27.09.2023 Bulletin 2023/39**

(73) Proprietor: **DAF Trucks N.V.**
**5643 TW Eindhoven (NL)**

(72) Inventors:
- **VAN DER KNAAP, Albertus Clemens Maria**
**5643 TW Eindhoven (NL)**
- **LIEBREGTS, René Mathias Johannes**
**5643 TW Eindhoven (NL)**
- **WEIJENBORG, Bernardus Johannes Maria**
**5643 TW Eindhoven (NL)**
- **RAUE, Victor**
**5643 TW Eindhoven (NL)**
- **KERSTEN, Roel Lambertus Johannes**
**5643 TW Eindhoven (NL)**

(74) Representative: **V.O.**
**P.O. Box 87930**
**2508 DH Den Haag (NL)**

(56) References cited:
**EP-A1- 3 616 956**
**WO-A1-2009/001734**
**DE-B4- 112008 001 645**
**US-A1- 2020 331 334**
**US-B1- 10 493 837**
**US-B1- 9 884 545**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 247 659 B1

**Description**

BACKGROUND OF THE INVENTION

The invention relates to vehicles with alternative fuel sources, in particular vehicles using electric fuel cells with sources such as hydrogen gas, liquid hydrogen or other fuels in gas or liquid form.

Of particular interest are heavy load vehicles such as trucks. Trucks in general are used to transport heavy loads over long distances. Particularly in case of heavy duty long haulage applications so-called tractor semi-trailer combinations are used in which the tractor vehicle pulls and partly supports the payload that is packed onto the semi-trailer. In new generations of these trucks, fuel cells may provide an important contribution to the electrification of the drive train, since they are seen as a promising and increasing factor in providing electrical energy, in addition to battery setups.

The fuel cell system is a complex assembly of highly specialized components, typically combined in a module that houses closely packed subsystems that convert the hydrogen into electrical energy. These subcomponents are then assembled together in a box like arrangement, that can be mounted on the truck in any one or more numbers, to reach a desired amount of electrical power available. Typically such subcomponents are fragile, for instance the economic lifetime of a membrane of a fuel cell significantly suffers from heat shock and the injector system to feed hydrogen to the fuel cell stack is prone to mechanical vibrations. Moreover, many of the fuel cell subcomponents, like the electrified air compressor, have an application origin in passenger cars where usually the mechanical vibration levels are significantly lower than typically occurring in heavy duty trucks so that it is highly beneficial to limit accelerations that impact the fuel cell module such that these high volume (low cost) passenger car components can be reused. Doing so, also the lifetime of the fuel cell system can be increased according the use case of trucks typically requiring to survive an operation of more than 1,5 million kilometers of driving on various road conditions.

The truck and in particular a tractor to pull a semi-trailer is conventionally built upon a chassis formed by at least two elongate beams along a length of the truck. The chassis is the central mounting base of the truck to interconnect all main subsystems together, inter alia, providing a suspension mount for a suspension system that connects to unsprung masses such as the front and rear axles having (driven) wheels that put the total vehicle load on the road. The chassis is the main interaction element to transmit motions and forces that are acting between the miscellaneous components of truck assembly and where road inputs, transmitted to the chassis via the unsprung axles, can be considered to be the main vibration excitation source. Such a chassis comprising two longitudinal members connected by cross members, is a so called ladder frame. Over the main suspension this chassis is supported by the axles, in general a front and a rear axle. On the chassis may be mounted or suspended the truck cabin, the motor, batteries (e.g. as described in US10493837 and EP3616956), trailer coupling, and many other components, and will also provide as a mounting arrangement for mounting one or more fuel cell modules. The latter may be placed outside the ladder frame between the front axle tire and the rear axle tire, or alternatively between the chassis beams between front and rear axle or even on top of the front axle where normally in a truck with a conventional driveline the internal combustion engine is situated.

A ladder frame offers enough strength and durability for its use, but its slender shape brings an elasticity that allows the components fixed onto it to swing and vibrate. On a tractor unit these vibrations achieve even higher acceleration levels than on a truck fitted with a rigid body. This provides a difficulty for fragile components such as a fuel cell module, since it may be exposed to accelerations exceeding 3 or 4 g or even higher, which can be harmful for the durability of the module.

During the engineering of a truck chassis, stiffness and damping of the connections of the components to the chassis are analyzed and tuned in such a way that the vibration modes are controlled within limits that guarantee a durable, comfortable and safe operation of the vehicle over its life. Since the chassis also forms a suspension mount for a suspension system that connects to an unsprung mass including an axle and (drive) wheels, excitations of the unsprung mass due to movements of the axles (which are connected to the road via the poorly damped and relatively stiff vertical tyre spring) in their eigenmodes are the most violentimpacting the chassis, often being the root cause for component vibration levels that may reach up to acceleration peak levels of 10 g [m/s$^2$] due to resonances with the flexible chassis torsional modes.

In order to achieve an acceptable service life it is aimed to protect the fuel cells against high accelerations, that may arise from driving the truck over uneven terrain, giving rise to energy impact. The problem to be solved is to find a way to connect the fuel cell box to the frame such that under all driving circumstances the acceleration levels in the box remain below 5 g [m/s$^2$], and preferably below 2-3 g [m/s$^2$].

It is an objective of the claimed invention to solve one or more problems faced in the state of the art.

SUMMARY OF THE INVENTION

The invention provides for solving or improving at least one of the disadvantages of the prior art by providing a truck or tractor semi-trailer combination interconnected via a fifth wheel, with a chassis formed by at least two elongate

beams along a length of the truck. The chassis forms a suspension mount for a suspension system that connects to an unsprung mass including an axle and (drive) wheels, which has a primary eigenfrequency mode (also called wheel hop mode) impacting the chassis. The at least two elongate beams are coupled by at least a cross beam extending laterally along the truck. The cross beam forms at least one mounting position for a first fuel cell mount, said chassis further comprising a second fuel cell mount. First and second fuel cell mounts are arranged to carry a fuel cell module having elastic connectors provided at the side walls, to connect to said first and second fuel cell mounts respectively. In this manner the fuel cell module is elastically suspended to the chassis with a heave, pitch and roll eigenfrequency that is tuned to be distinct of the primary eigenfrequency of the unsprung axle mass by providing the elastic connectors with an axial stiffness, in the direction of gravity, that is substantially lower than a lateral and/or longitudinal stiffness, wherein the ratio of the lateral stiffness and the axial stiffness is more than 5.

The elastic connectors may advantageously form a three or four point suspension. A four point suspension will provide a better and more practical packaging concept for the fuel cell module. A three point suspension concept is a preferred solution for truck applications where extreme torsional chassis twist deflections occur and where the bushing spring travel of the elastic connectors needs to be limited due to clearance constraints. A three point suspension avoids a so-called overdetermined construction of the fuel cell module fixation system, especially relevant when the axial stiffness of the elastic connectors cannot be tuned sufficiently soft and with enough travel stroke in this sense.

By choosing a ratio between the axial stiffness of each elastic connector, with a low stiffness in axial (Z-) direction and a high stiffness in longitudinal (X-) and lateral (Y-) directions, it is found possible to lower the eigenmodes of the fuel cell module outside a frequency range where the axles cause a high excitation impact to the chassis. In particular roll, heave and pitch modes can be put below 10 Hz while the other eigenmodes lay above the 15Hz. A way to obtain these lower pitch frequency modes can be by having the elastic connectors mounted to the fuel cell module with a longitudinal interdistance adapted to reduce a pitch frequency below the primary eigenfrequency. A way to obtain these lower roll frequency modes can be by having the elastic connectors mounted to the fuel cell module with a lateral interdistance adapted to reduce a roll frequency below the primary eigenfrequency.

Another way may be to have the fuel cell module mounted with a center of gravity vertically distanced from a plane including at least two elastic connectors, to further reduce the fuel cell module's pitch and roll eigenfrequency.

The specific stiffness ratio of the rubber mounts combined with the distances of the rubber mounting points between each other in longitudinal and lateral direction and also the vertical distance of the center of gravity below the rubber mounting points allow independent tuning of these six eigenmodes.

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention.

## BRIEF DESCRIPTION OF FIGURES

Figure 1 (A and B) shows a general layout of a truck chassis with different mounting locations for a pair of fuel cells;
Figure 2 shows an exemplary energy spectrum for the unsprung mass of a practical embodiment;
Figure 3 shows a detailed view of a side mounting location;
Figure 4 (A and B) shows schematic mount arms in top view arranged to carry a fuel cell module having elastic connectors provided at opposite sides;
Figure 5 (A and B) shows a simplified schematic representation of the fuel cell module demonstrating the working principle of suspending a fuel cell module with elastic connectors in its upper corners;
Figure 6 (A and B) shows a practical embodiment of an elastic body;
Figure 7 (A and B) shows the elastic body of Figure 6 comprised in a complete mounting assembly of the elastic connector;
Figure 8 (A, B and C) shows an exemplary explanation of the design method of the embodiment of Figure 7 to provide a stiffness characteristic of the elastic connector with integrated bump stop functionality;
Figure 9 (A, B1 and B2) shows two cross sectional views of two fuel cell modules in its outer roll angles that are limited by the bump stops of Figure 8
Figure 10 (A, B, C1 and C2) shows a schematic generic layout for mounting the elastic connectors to the fuel cell module at different heights and positions at the side walls for the purpose of mounting the fuel cell modules at different locations in the chassis.

DETAILED DESCRIPTION

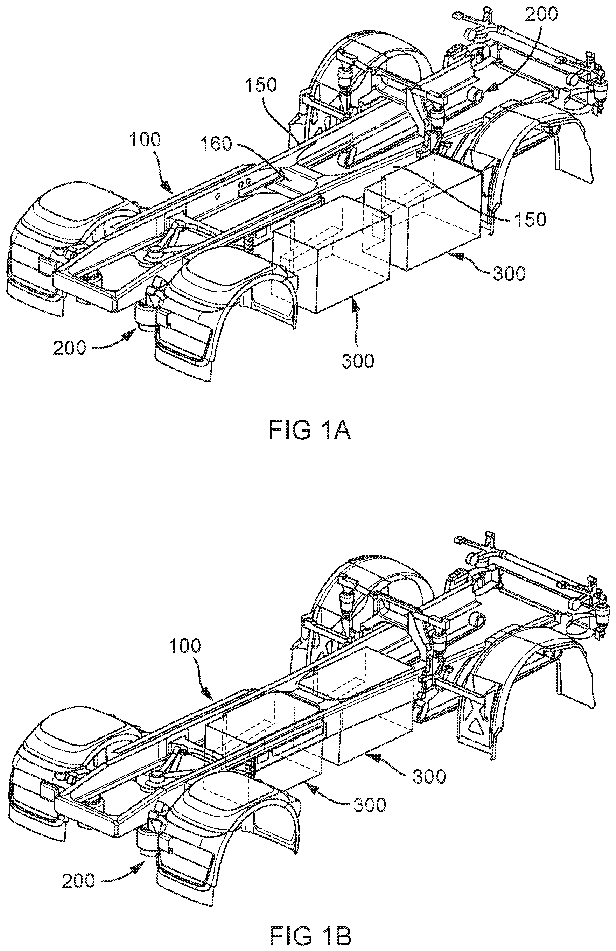

Turning to Figure 1 there is disclosed a general layout of a truck chassis. The chassis is of a conventional type i.e. the chassis is the central mounting of the truck for providing, inter alia, a suspension mount for a suspension system 200 that connects to an unsprung mass including an axle and wheels (not shown). Such a chassis 100 comprises two longitudinal members 150 connected by cross members 160, which is a so called ladder frame. Over the main suspension this chassis is supported by the axles, in general a front and a rear axle (not shown). On the chassis may be mounted or suspended the truck cabin, the motor, batteries, trailer coupling, and many other components, and will also provide as a mounting arrangement for mounting a fuel cell module 300. The fuel cells may be placed outside the ladder frame (Fig A) between the front axle tire and the rear axle tire, or alternatively between the chassis beams (Fig B) between front and rear axle or in the front above the front axle (not shown in Fig B).

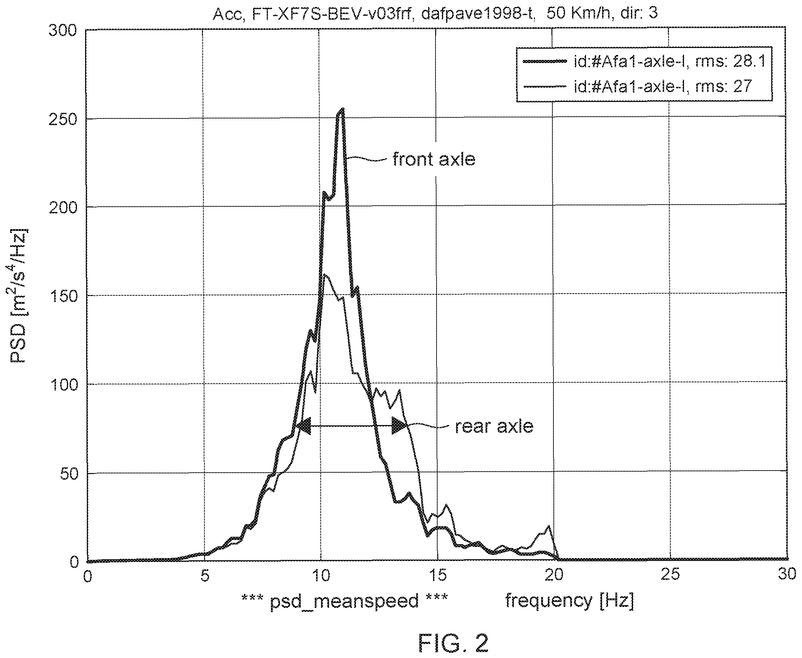

Figure 2 shows an exemplary graph of power spectral densities of occurring accelerations (vibrations) of a front axle and rear axle while driving a truck at 50 km/h over uneven road. This will induce vibrations to the chassis, that will be centered around a central frequency, called the primary eigenfrequency which is here seen as lying in a range between 8 and 15 Hz (2 sigma). Eigenfrequency coupling is dependent on the specific stiffness and mechanical setup of the truck, but in general a chassis forms a suspension mount for the suspension system that connects to an unsprung mass including an axle and (drive) wheels. This will exhibit a primary eigenfrequency mode impacting the chassis that is predominantly dependent on the poorly damped tyre stiffness characteristic (stiffness) and the unsprung axle mass. The combination of the latter two parameters is preferably designed such that the unsprung and poorly damped eigenfrequencies of the axles are situated above 10 Hz in the frequency range in order to avoid interaction with low frequent resonance vibrations near the 1 Hz range of the main suspension systems that connect the wheels and the cabin to the chassis and which are relevant for provision of good ride comfort. Note that that the human body (particularly the stomach) is extremely sensitive to vibrations below 1 Hz. For this reason the cut-off eigenfrequencies of these main suspension systems have to be designed at this very low value of ca. 1 Hz in order to provide excellent vibration isolation of the cabin compartment and thus may not be disturbed by the unsprung axle modes. A factor 1 Hz to 10 Hz provides for a safe margin in this sense. It is stipulated that despite the low cut-off frequency of the axle suspension system that carries the load on the chassis, still a serious amount of unsprung axle vibrations are transmitted from the wheels on the ground to the chassis (and thus to the components that are connected to the chassis) via the suspension linkage system and via the incorporated suspension dampers that need to control the so-called 10 - 15 Hz wheel hop mode related vibrations to an acceptable amount with the objective to keep the wheels in contact with the ground for reasons of traction and manoeuvring stability.

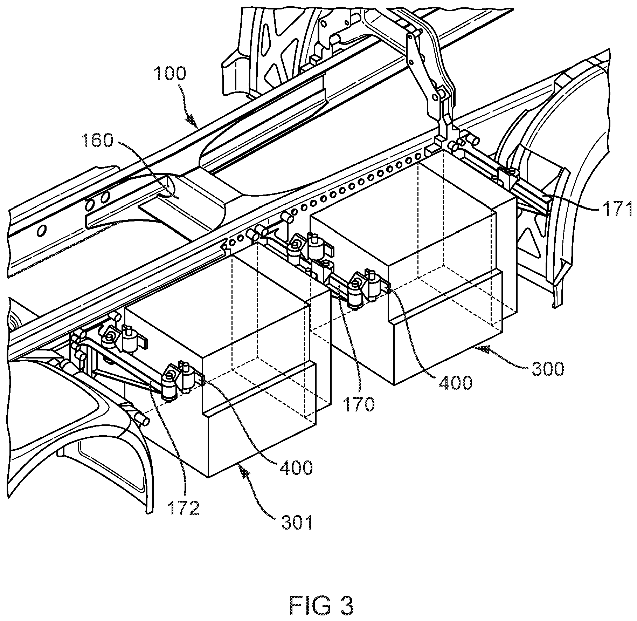

In more detail Figure 3 shows the fuel cell modules mounted with first, second and third mount arms (170, 171 and 172) extending sideways of the two elongate beams 150 to mount said fuel cell modules 300, 301 laterally extending sideways of the truck chassis. The cross beam 160 forms a mounting position for a first mount arm 170. Chassis 100 further comprises a second mount arm 171. First and second mount arms 170, 171 are arranged to carry a fuel cell module 300; first and third mount arms 170, 172 are arranged to carry another fuel cell module 301. While in principle, the modules 300, 301 may be connected, it is found that this negatively impacts the module's longitudinal and yaw eigenfrequency which will couple stronger to the primary eigenfrequency of the unsprung mass. Thus, preferably the two or more fuel cell modules are mounted mechanically uncoupled from each other. For mounting the fuel cell modules 300, 301, elastic connectors 400 are provided at opposite sides, to connect to said first, second and third mount arms 170, 171, 172 respectively.

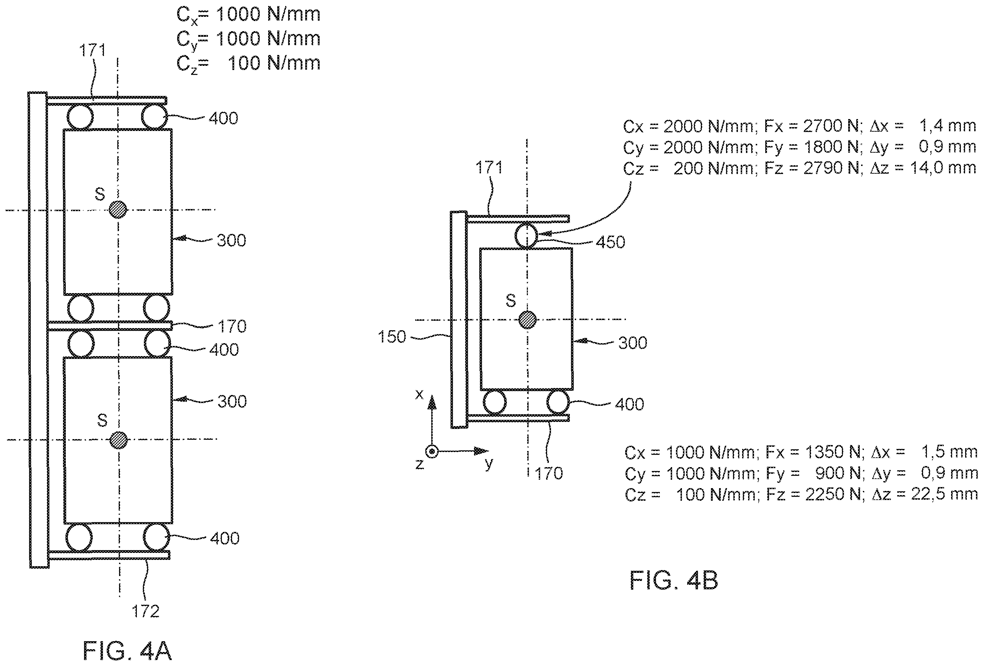

Figure 4 shows a schematic illustration of the inventive mounting concept, where exemplary mounting configurations are shown. In Figure 4A, a first mounting arrangement with four elastic fixation points is shown, wherein the elastic connectors 400 are each substantially identical, i.e. have the same elastic characteristics. The four point suspension system has four flexible mounts that are attached to the upper corners of the fuel cell box 300. In this arrangement, the connectors 400 are provided at or near the outer corners of the module 300, which facilitates a mechanical construction of the support of the box like module. In this case the fuel cell box 300 is mounted with four resilient connectors to the chassis, in particular mount arms 170-172. Each of these mounts contributes to a spring stiffness to allow a flexible mounting. This flexibility is used to elastically absorb vibrations and thereby reduce the acceleration levels in the fuel cell. Alternatively in Figure 4B a mounting arrangement with three fixation points is shown where on one of the opposing sides of the fuel cell module 300 the two elastic connectors are effectively integrated into one joint 450 and thus having no distinct lateral base to counteract roll motions. As a consequence the two elastic connectors at the other side are solely providing resistance to roll motions of the fuel cell module: the larger the lateral distance between these connectors is, the stiffer the roll counteracting resistance will be. As explained, a three point mounting arrangement is good for avoiding an over-determined fixation construction in case large chassis torsional twist angles are likely to happen. For reasons of suspension symmetry in longitudinal direction with respect to supporting the center of gravity, the single elastic connector 450 in the middle of the opposing fuel cell module side is designed with double high stiffness characteristic compared to one of the two elastic connectors on the other opposing side.

Indicated exemplary values for the stiffness in these arrangements of Figure 4 are a result of a cylinder symmetrical elastic property that differs in axial vertical direction (Cz) respective to the radial longitudinal and lateral

directions (Cx, Cy). From measurements it is found that the acceleration levels in the mounting points on the chassis are highest in Z-direction, specifically applicable for heavy components that are being attached to the side of the chassis. The accelerations in X- and Y-direction on these mounting points have a lower level. Full vehicle simulations indicate that with a relatively low spring stiffness Cz lower than 200 N/mm, e.g. 100 N/mm in Z-direction the acceleration levels in the fuel cell may remain in an acceptable range. The rationale behind this low stiffness selection is to target the eigenfrequency of the vertical heave modes of the fuel cell modules near the 5 Hz frequency region which is substantially below the 10 - 15 Hz unsprung axle modes. However in X- and Y- directions (i.e. the plane normal to the direction of gravity) this low spring stiffness is not desired as the movements in X- and Y- directions of the fuel cells 300, 301 are restricted in view of limited range for movement in that plane, in order to keep the fuel cells clear from their surroundings - i.e. neighbouring chassis beams 150 or support arms 170. For this reason, the suspension stiffness in the orthogonal directions of a rubber mount may be a factor 40 higher, or, in order to reduce complexity in the rubber manufacturing ranging between a factor 10 to 20. Depending on interaction with other high frequency vibration modes of the flexible chassis structure the factor may be at least 8.

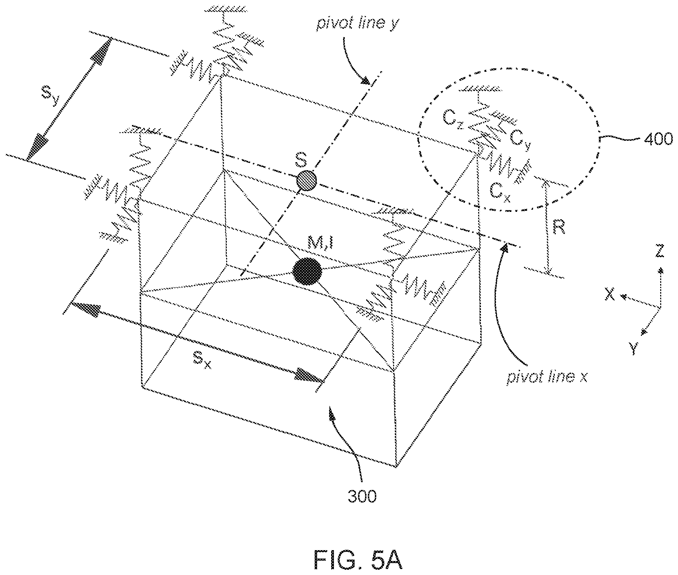

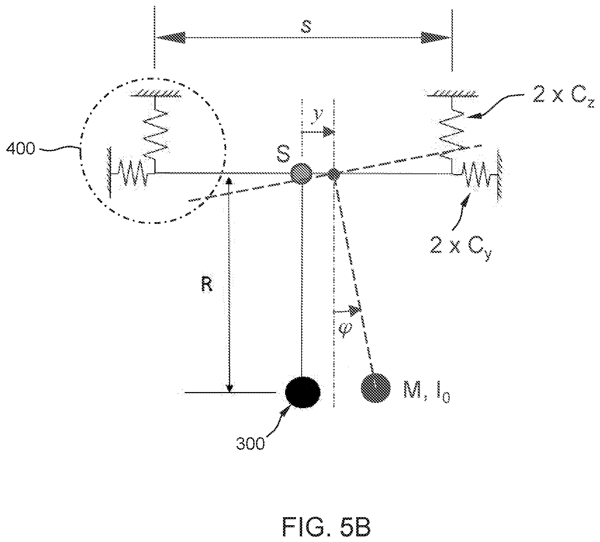

For instance, when a spring stiffness of 100 N/mm in Z-direction is selected it can be combined with a spring stiffness of at least 800 N/mm in X- and Y- direction. A further advantage of designing the fuel cell mounts with such relatively high longitudinal and lateral stiffnesses is that the translational motions in the upper plane is limited to a negligible amount in comparison to the horizontal displacements of the center of gravity of the fuel cell box for the case that the center of gravity is located at a distinct distance below the vertical location of the elastic connectors. This aspect contributes to further lower the roll and pitch eigenfrequencies of the fuel cell module which will be explained later with the description of Figure 5.

With a spring stiffness Cz, an eigenfrequency for the vertical heave mode of the fuel cell module can be estimated at:

$$f_{heave,z} = \frac{1}{2\pi} \cdot \sqrt{\frac{4 \cdot c_z}{M}} \quad (1)$$

Wherein Cz is tuned such that the vertical heave mode the fuel cell box is situated at a relative low frequency outside the primary eigenfrequency range of about 5-10 Hz.

Additionally a yaw eigenfrequency can be estimated at:

$$f_{yaw,z} = \frac{1}{2\pi} \cdot \sqrt{\frac{c_x \cdot s_y^2 + c_y \cdot s_x^2}{I_{z,0}}} \quad (2)$$

wherein Cx and Cy are the lateral spring stiffnesses, and Sx and Sy the fuel module longitudinal length dimensions in X (along the vehicle) and lateral length dimension Y (transverse to the vehicle), resulting in a rotational stiffness verses the fuel cell's moment of inertia $I_{z,0}$ around the vertical Z-axis Similarly, roll and pitch eigenfrequencies can be estimated at:

$$f_{roll,x} = \frac{1}{2\pi} \cdot \sqrt{\frac{L_{S,x}}{I_{S,x}}} \quad (3)$$

$$f_{pitch,y} = \frac{1}{2\pi} \cdot \sqrt{\frac{L_{S,y}}{I_{S,y}}} \quad (4)$$

With Is,y and Is,x being the mass moments of inertia around point S (in Figure 4 point S is coinciding with the location of the center of gravity of the fuel cell module) and Ls,x and Ls,y being the rotational stiffnesses around the X-and Y-axes. The rotational stiffness around point S can be computed as a function of the four vertical spring stiffnesses acting together (in counter phase) in each corner of the fuel cell box, being:

$$L_{S,x} = c_z \cdot s_y^2 \ ; \ L_{S,y} = c_z \cdot s_x^2 \quad (5)$$

It can be gleaned from the equations, that the fuel cell may mounted with a heave, pitch and roll eigenfrequency that are all tuned to be distinct of and situated below the primary eigenfrequency of the unsprung axle mass formed by the elastic connectors having an axial stiffness, in the vertical direction of gravity, that is lower than a longitudinal and lateral stiffness. Equation 1 determines the heave eigenfrequency of the fuel cell module as a function of the vertical stiffness Cz of the elastic connectors. As a consequence an optimal setting for this stiffness is to be derived to tune this heave eigenfrequency near the 5 Hz frequency range. A way to obtain lower pitch frequency modes can be by having the elastic connectors mounted to the fuel cell module with a longitudinal interdistance Sx adapted to reduce a pitch frequency below the primary eigenfrequency. A way to obtain lower roll frequency modes can be by having the elastic connectors mounted to the fuel cell module with a lateral interdistance Sy adapted to reduce a roll frequency below the primary eigenfrequency.

The equations 3, 4 and 5 indeed indicate that the roll and pitch eigenfrequencies can be tuned independently from formula 1 by a proper combination of the length dimensions, being the distances between the elastic connectors in longitudinal direction Sx and lateral direction Sy of the fuel cell module, additionally to its mass, with the objective to suspend the fuel cell with a pitch and roll eigenfrequency to be distinct of the primary eigenfrequency despite the fact that vertical stiffness of the elastic mounts is already fixed by a preferred tuned setting of the heave mode. However the distance s might be constrained by practical construction and packaging issues. For instance distance s may need to have a certain minimal width related to the (fixed) geometrical dimensions of the fuel cell frame. Furthermore distance s favourably limits (in combination with integrated bump stops) the maximum amplitudes of the sway motions in order to provide sufficient clearance to avoid collisions of the vibrating fuel cell box with other construction parts of the chassis.

For the case of relative high longitudinal and lateral stiffnesses Cx, Cy relative to the axial vertical stiffness Cz, in plane vibrations can be simply estimated by assuming that the relative low frequent roll and pitch motions of the fuel cell module will not significantly affect the fairly high frequent lateral and longitudinal mass acceleration forces of the fuel cell module that are in a dynamic equibrilium with the forces that the lateral and longitudinal springs Cx, Cy, exert on the fuel cell mass. In other words the high frequent dynamic displacements of the contact plane wherein the horizontal springs Cx, Cy are acting are dominant for the resulting eigenfrequencies of the lateral and longitudinal resonance vibrations of the fuel cell model (for reference see displacement y in Fig 5B). Hence the eigenfrequencies of the lateral and longitudinal vibrations of the fuel cell box can be approximated with:

$$f_{lateral,y} \approx \frac{1}{2\pi} \cdot \sqrt{\frac{4 \cdot c_y}{M}};\ f_{longitudinal,x} \approx \frac{1}{2\pi} \cdot \sqrt{\frac{4 \cdot c_x}{M}} \quad (6)$$

Reference is made to Figure 5, where a simplified model is provided, that offers even a greater flexibility for careful tuning of the resonance characteristics of the elastically mounted fuel cell module, e.g. when a reference distance s becomes too large to position the roll and pitch eigenfrequencies well below the primary eigenfrequency of the unsprung axle mass, e.g. 10 - 15 Hz. In this embodiment, the fuel cell module is mounted with a center of gravity that is substantially lower than the opposing connectors, to allow for a rocking motion to further reduce the fuel cell module's pitch and roll eigenfrequency. The figure offers in Figure 5A a perspective view of the fuel cell module 300 mounted at four points with spring characteristics Cx, Cy, Cz, with - relative to the vehicle - a length dimension Sx in longitudinal direction, a width dimension Sy in lateral direction and in Figure 5B a cross sectional view in the vertical and lateral vehicle plane of the fuel cell module 300, illustrated with a center of gravity located at M which is at a distance R lower than the elastic connectors with width dimension Sy. Thus, in this mounting arrangement the fuel cell's center of gravity M is situated substantially below the mounting plane defined by the elastic connectors. In a practical example, the distance R could be ranging 100 - 500 mm below the upper plane, e.g. 250 mm. As a result the box will react to the primary eigenfrequency with a pitch and roll motion around the indicated pivot lines y and x going through point S. This is due to the fact that only substantial deflections of the fuel cell mounts in vertical direction z can occur, in view of the substantial high stiffness of the elastic connectors in the horizontal plane.

Compared to equations 3-4, the moment of inertia is now changed: the effective mass moment of inertia for roll rotations now reads:

$$I_s = I_0 + M \cdot R^2 \quad (7)$$

where in equations 3-4 the mass moment of inertia around point S ($I_S$) was equal to the mass moment of inertia around the center of gravity ($I_0$). Combining these two formulas the eigenfrequency of the roll mode reads:

$$f_{roll,x} = \frac{1}{2\pi} \cdot \sqrt{\frac{L_{S,x}}{I_{S,x}}} = \frac{1}{2\pi} \cdot \sqrt{\frac{c_z \cdot s_y^2}{I_{0,x} + M \cdot R^2}} \quad (8)$$

Similarly the eigenfrequency for the pitch mode can be depicted:

$$f_{pitch,y} = \frac{1}{2\pi} \cdot \sqrt{\frac{L_{S,y}}{I_{S,y}}} = \frac{1}{2\pi} \cdot \sqrt{\frac{c_z \cdot s_x^2}{I_{0,y} + M \cdot R^2}} \quad (9)$$

These formulas show that the eigenfrequencies of the roll and pitch modes can be further reduced by offsetting the center of gravity (having mass M) with a distance R beneath the horizontal plane in which the elastic connectors are located. Despite the fixed low stiffness Cz and geometrically bounded length and width restraint parameters for Sx and Sy. Furthermore it also may be noticed that the effect of positioning the center of gravity below or above point S (which is located in the horizontal plane of the elastic connectors) is the same: in both cases the eigenfrequencies of roll and pitch will be lowered with the same amount of R as the increase of mass moment of inertia around point S has a quadratic relationship with this vertical distance offset parameter.

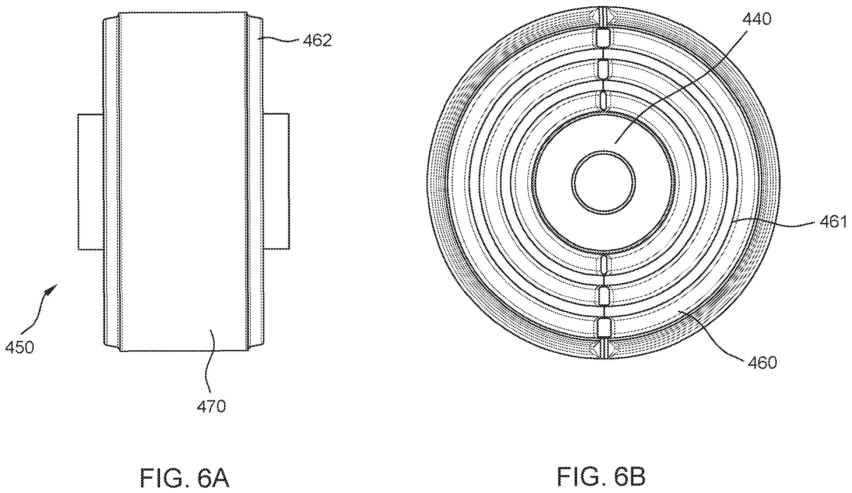

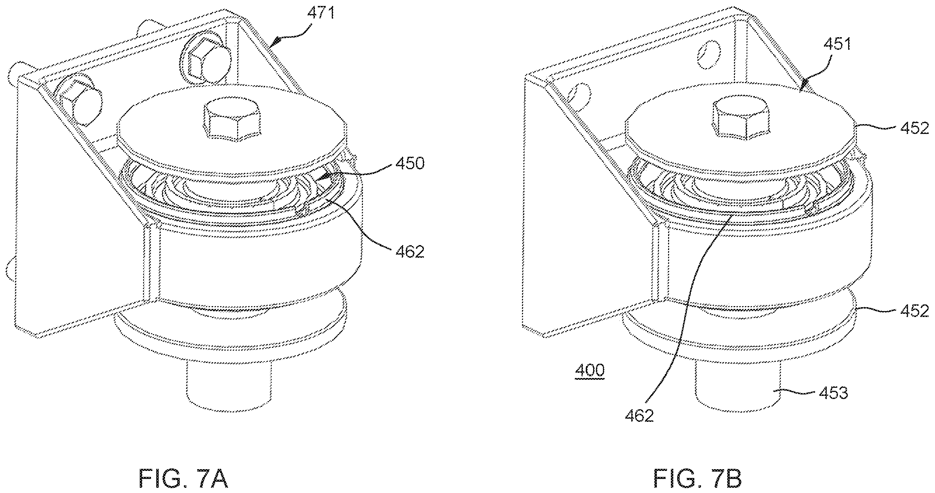

Figure 6 shows an elastic body assembly 450 of an elastic connector 400 which is encapsulated in bushing 470 for the purpose of mounting to the fuel cell module frame as shown in Figure 7. The elastic body assembly 450 is formed as a metal core piece 440 to be coupled to a first mount piece. The metal core is centrally comprised in an elastic body 460 that is pressed into a metal bushing 470, said bushing 470 mechanically coupled to a second mount piece. The elastic body 460 can be formed by vulcanized rubber with reinforced layers 461 of higher stiffness, which are tightly pressed into the bushing to increase initial elastic tension and compression characteristics as known in the art. The elastic body assembly 450 is to that effect preferably asymmetrically designed along its axial length to provide for a symmetrical neutral position when loaded by the mass of fuel cell module 300. Through proper selection of the rubber material regarding shore hardness and addition of other material supplements ("additives") the stiffness characteristics can be tuned together with a limited amount of structural damping (frequency dependent hysteresis). The latter is important to dampen and control the fuel cell module oscillations. Inclusion of fluid chambers into the elastic body 160 may further increase the damping performance of the elastic mounts.

In more detail, Figure 7 shows the mechanical structure of the elastic body assembly 450 in the mechanical connector, shown in exemplary drawings Fig 7A-7B. In particular, Fig 7A shows the second mount piece without the first mount piece 451 that connects the metal core 440 to the chassis support structure 453 (e.g. via a bolt), not further shown in Fig 7B for clarity reasons.

The second mount 471 can be mounted to the fuel cell module wall (usually a rectangular frame or box), in particular, a reinforced corner section thereof, or any other reinforced position that is selected for a suitable arrangement. The second mount 471 connects to the elastic body assembly, in particular, its metal outer bushing 470 (as shown in Figure 6), to allow for a resilient suspension of first mount 451, coupled to the central core piece 440 of the elastic body assembly 450.

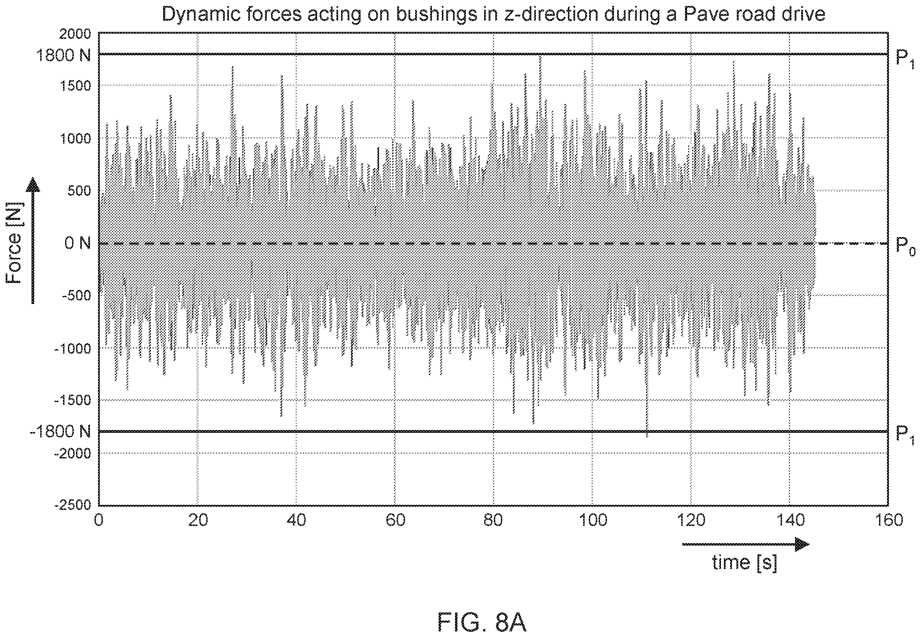

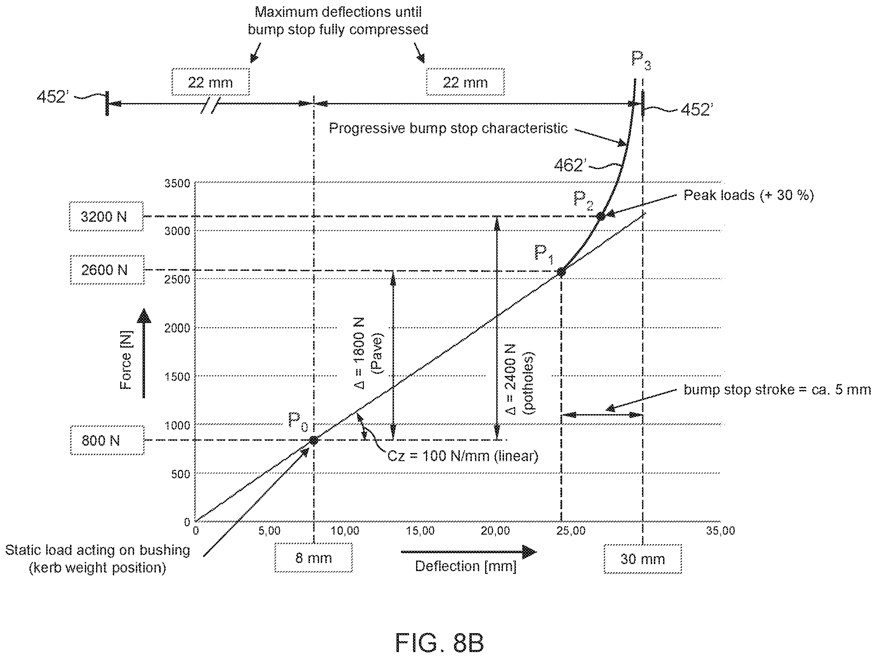

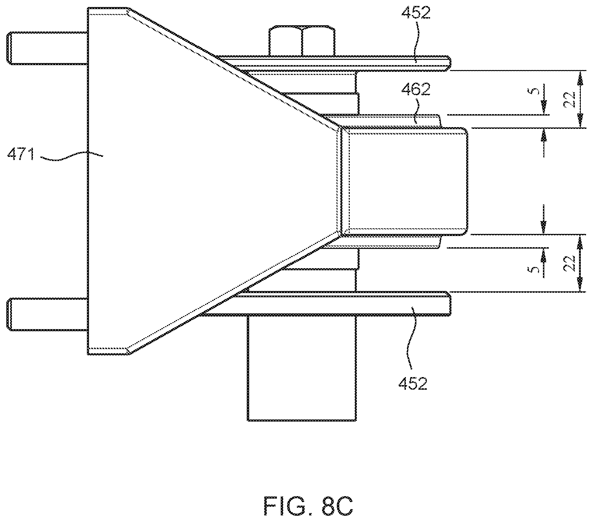

The first mount piece is a cylindrical core preferably provided with a stopper flange 452 that abuts against the elastic body and the bushing when fully compressed or extended. Approximately 5 mm of rubber material is bulging out (in axial direction) of the metal outer bushing ring 470 to abut the stopper flange 452 causing a progressive increase of axial force. This excess rubber material 462 is thus used for the implementation of a carefully designed and integrated bump stop spring with a progressive stiffness characteristic to gently slow down and stop the fuel cell module motion when the stopper flange hits this last elastic zone before full metal to metal contact can happen. This integrated bump stop functionality is a very important feature to ensure a collision free packaging envelope of the rocking fuel cell module and even reduces extreme peak accelerations protecting the fuel cell system when driving over potholes and/or in misuse cases which all will be explained in the description of Figures 8 and 9 and 10. The proposed integrated bushing embodiment of Figure 7 provides a compact, low weight and low cost modular solution to add elastic mounts to the side walls of a fuel cell module according to the claims of this invention.

Figure 8 shows an example of a specific elastic mount design with integrated bump stops being composed of progressive spring characteristics to limit the fuel cell module displacements to a restrained packaging space without disturbing the desired low frequent eigenfrequencies of heave, roll and pitch under normal and severe driving conditions. In the example, the elastic connector may have a working stroke ranging between 15 and 30 mm, although other numbers, e.g. 40 or 50 mm are also practical as long as a collision free packaging envelope is provided for the fuel cell module at maximum rolling and pitching angles. For the purpose of explaining this exemplary and preferred design of the assembled bushing in Figure 8A the occurring dynamic forces acting in the elastic mounts (measured time signal) are depicted when

driving the tractor semi-trailer combination over a so-called "Pave road". These typical cobble stone pavements are considered to be a severe load case to excite the complete vehicle structure in its entire resonance frequency range and where the input vibrations of the unsprung wheel hop mode (primary frequency) is most severe. To keep the fuel cell module accelerations below 5g it is important that during this load case the deflections of the elastic mounts are situated in the lineair stiffness zone. From Figure 8A can be concluded that the maximum force amplitudes do not exceed 1800 N. Figure 8B shows the complete spring characteristic of the assembled bushing concept with integrated stopper flanges as described in Figure 7. The linear stiffness zone (acting in axial vertical direction of the bushing) is located between point $P_0$ and $P_1$. $P_0$ corresponds to the neutral position of the deflected elastic body assembly 450 loaded with the static gravitational mass force of the fuel cell module, in this example equalling 8 mm of compression at a vertical load of 800 N per bushing. Adding the dynamic force amplitudes of 1800 N that occur during Pave drives means that point $P_1$ may first be reached at a value of 2600 N in combination with a linear increase of rubber spring force over a stroke of approximately 17 mm. Beyond this point the stiffness between first mounting piece 451 and second mounting piece 471 must be gradually increased to avoid an overload of the elastic body 460 and limit the dynamic motion envelope of the fuel cell module to a collision free build-in area once even higher road inputs (misuse) happen. This maximum defection point is characterized by point P3 where the progressive bump characteristic reaches a vertical asymptote 452' that in this case is located at a compression travel of 30 mm of the elastic body insert of the bushing. At this point a full metal to metal contact of the stopper flange 452 to the bushing outer ring 462 would occur and should thus be avoided for durability reasons. Occasional peaks like driving over potholes which typically occur ca. 300 times in a complete life time of a commercial vehicle may give rise to approximately 30 % higher dynamic force peak levels than driving over a Pave road. The progressive stiffness increase of the bump stop may be designed such that point $P_2$ is located somewhere in the middle between points $P_1$ and $P_3$ allowing for an acceptable resilience of the resulting bushing characteristic under these extreme conditions and thus avoiding high fuel cell module deceleration peaks when the bump stop zone is entered. From Figure 8B can be learned that in this particular design of the invention embodiment the maximum bushing strokes amount +/- 22 mm (symmetric design around point $P_0$) and that approximately 5 mm of stroke is available to incorporate the progressive bump stop characteristic (added to the linear deflection characteristic of the elastic rubber body). In Figure 8C a side view of the bushing embodiment as described in Figure 7 is given. Clear reference to the effective spring characteristic 462' of Figure 8B can be made regarding the position of the stopper flange 452 at 22 mm outside of the bushing housing 471 cq. outer ring 470 (not shown in Figure 8C for reasons of clarity) and the height of the excess rubber material 462 bulging out of the metal bushing ring which amounts approximately 5 mm.

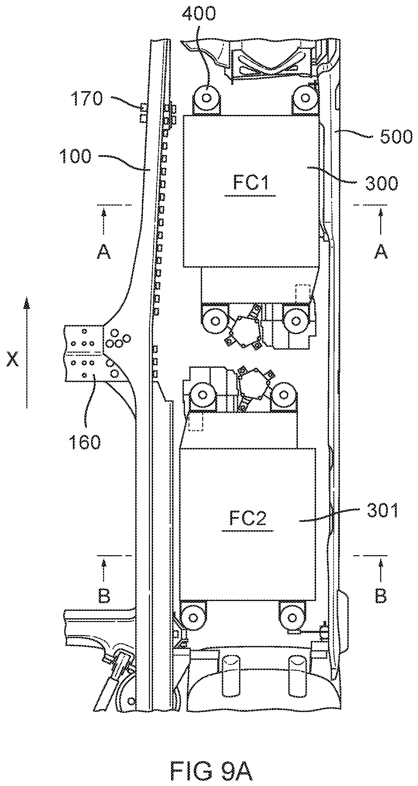

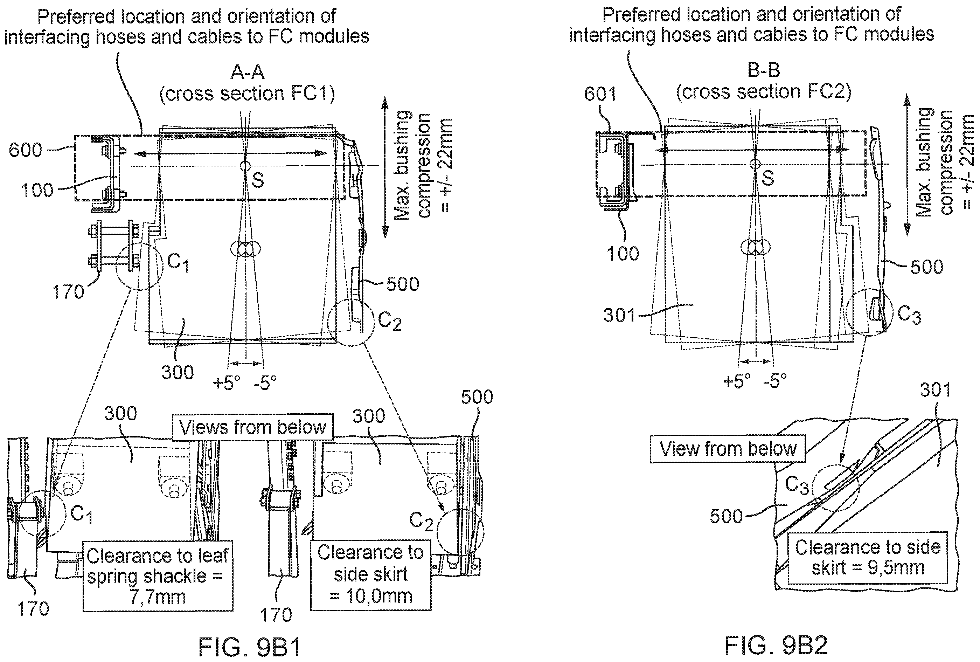

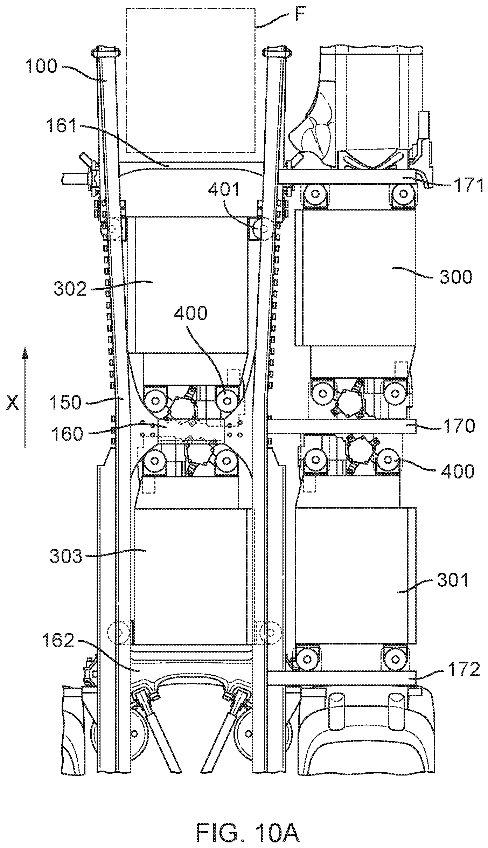

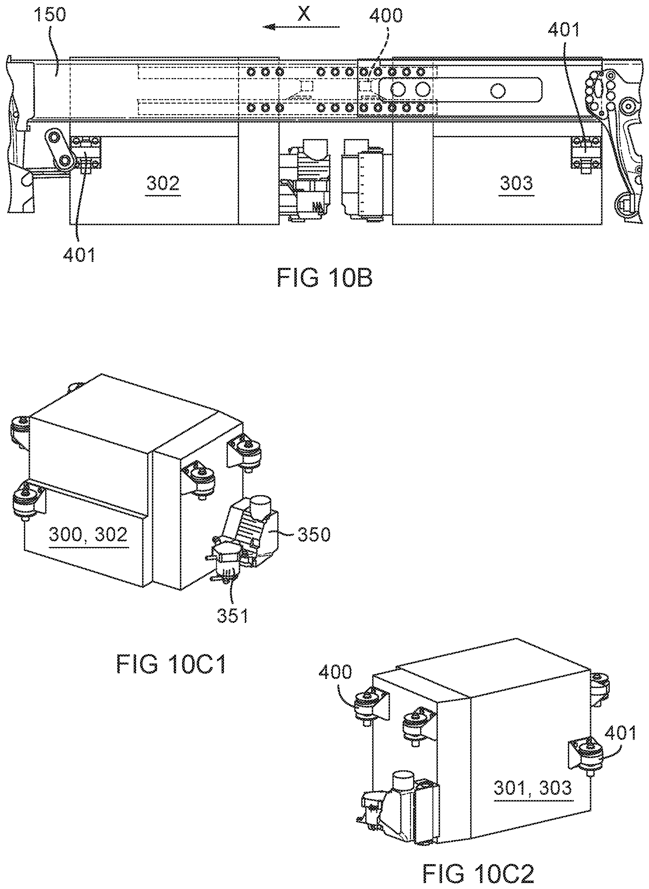

Figure 9 shows two cross sectional views of the rocking fuel cell modules 300 and 301 in its maximum roll angle positions limited by the bushing integrated bump stops according to the assembly of Figure 8 and for the situation that the fuel cell modules are placed at the outsides of the chassis according the embodiment of Figure 1A. Figure 9A shows a more detailed top view of the build-in situation of these two fuel cell modules that are enclosed in lateral direction by the chassis 100 and a side skirt 500 covering the fuel cell modules at the outside of the vehicle for reasons of styling, aerodynamics and keeping dirt away. A front axle leaf spring shackle may be a support arm 170 located in the near vicinity of the first fuel cell module 300. Rear axle suspension rod bracket (not shown in Figure 9) may be another support arm which is positioned close to the second fuel cell module 301. Figures 9B 1 and 9B2 show cross sections of fuel cell modules at positions A-A and B-B indicated in Figure 9A. As said, indicated maximum roll angles of the fuel cell modules are limited by the bushing embodiment according to Figure 8. Considering a maximum deflection bushing strokes of +/- 22 mm in conjunction with a lateral width dimension between the bushing of approximately Sy = 460 mm, maximum occurring roll angles may rise up to +/- 5 degrees. These two outer positions are displayed in Figures B1 and B2 with on the top half the actual cross section in a vertical plane opposing the longitudinal direction x of the vehicle and on the below half some views from below at the fuel cell modules showing details of clearance zones $C_1$, $C_2$, and $C_3$ at the bottom corners of the rolling fuel cell modules to neighboring chassis elements and the side skirt. Figure 9B1 shows that through application of the proposed bushing concept according to Figures 7 and 8 the clearance of the first fuel cell module 300 to the leaf spring shackle 170 can be effectively limited to a robust collision free rest zone of ca. 8 mm and to the side skirt to a zone of ca. 10 mm. Figure 9B2 shows that the clearance of the second fuel cell module is limited to a zone of ca. 10 mm with the same modular bushing concept. A similar analysis can be performed for the pitch angles of these modules. Application of a length dimension between the elastic connectors in longitudinal direction of approximately Sx = 1040 mm results in maximum angles of about 2 degrees which is substantially less than in roll direction due to longer base between the elastic connectors. In this perspective the collision free packaging envelope in longitudinal direction X of the two pitching fuel cell modules is less critical and thus leaving space between the fuel cell modules to position further needed fuel cell system components like an air filter 350 and an ion exchanger 351 at the opposing side walls of the two fuel cell modules (see Figure 10) in this area between the modules. Furthermore a number of additional flexible interfacing hoses and electrical cables need to be connected between the chassis and the fuel cell module for the purpose of water cooling of the fuel cell stack, communication between control ECU's and high voltage electric connections between the fuel cell and a chassis mounted high voltage junction box. These interfacing connections are designed to allow the relative motions between fuel cell module and chassis. Particularly the routing and supporting of the cooling hoses (inlet and outlet) of the fuel cell stack with a

typical diameter ranging between 35 and 45 mm to allow for cooling water flow rates ranging between 100 and 200 l/min and also the copper based high voltage electric cables with a diameter typically ranging between 10 and 20 mm is preferably arranged with interface connections provided in a horizontal plane or at least at a close vertical distance (e.g. ranging within 0-10 cm or even 0-20 cm) including at least two elastic connectors for mounting the fuel cell. This is depicted by top region 600 in Figure 9 B1 that shows the vertical position of roll pole S that coincides with a plane both including interfacing hoses and cables as well as elastic connectors. This results in the hoses and cables being submitted to small bending deflections and minimal axial and torsional deflections increasing durability and lifetime expectations. In addition, in view of their large diameter the hoses and cables are preferably positioned and routed at a location and orientation where it gives the least rise to disturb the soft and carefully tuned vertical spring stiffness characteristics of the elastic connectors. Preferably the supporting connectors of these interfacing cables and hoses are arranged having one at the chassis and the other at the fuel cell module, in a horizontal plane.

In Figures 9B1 and B2 these preferred location regions to position and arrange the relatively rigid interfacing elements (not shown for reasons of clarity) are illustrated by the top regions 600, 601 of the fuel cell modules in or close to, and preferably with a main orientation in parallel to, the horizontal plane at the vertical level wherein the elastic connectors are mounted to the fuel cell module (close to the position of the roll pole S). Doing so the hoses and cables are only submitted to vertically directed (partial) motions of the fuel cell module which are in perpendicular direction with the central axis of these hoses and cables. The longer the distance measured from the supporting connection at the chassis towards the connection on the opposing outside of the fuel cell module is, the lower these bending angles of the hoses and cables are and thus the better for durability and less disturbing the proposed fuel cell module suspension concept.

Figure 10 shows a schematic view of fuel cell modules positioned at various locations inside and outside the parallel longitudinal members 150 of the chassis 100. Figure 10A shows a top view at the chassis having two fuel cell modules 300, 301 positioned outside of the chassis in between the front and rear wheels and having connectors 400 that are attached to mounting arms 170, 171 and 172 which extend laterally outside the chassis beams 150. The position of the mounting arms correspond to stable locations of the chassis where the cross beams interconnect the two parallel U-shaped longitudinal beams 150. A first central cross beam 160 in the middle of the chassis making connection to first central mounting arm 170 carries four elastic connectors, two belonging to the first fuel cell module 300 and the other two belonging to the second fuel cell module 301. In the chassis according to Figure 10 two further cross members are present, one of them being the so-called cabin cross bridge 161 that supports the rear side of the cabin (via springs and dampers) and the other one being the so-call rear suspension cross member 162 to which the upper triangle arm of the rear axle is connected and that supports the fifth wheel (not shown for reasons of clarity). These two further cross beams may provide a basis to connect the two further mounting arms 171 and 172 that respectively carry the remaining elastic connectors 400 of the two fuel cell modules 300 and 301.

Alternatively two fuel cell modules 302 and 303 may be positioned in the middle chassis 100 between the two longitudinal members 150. Relating to the considerable height of the fuel cell modules, typically ranging between 600 and 800 mm, the modules are positioned in length direction between the three indicated chassis cross members leaving less space available to place all four elastic connectors at the opposing sides (in longitudinal direction) of the fuel cell modules. The central cross member 160 in the chassis provides for a stable and robust chassis structure to directly connect two fuel cell module elastic connectors 400 to. As result these elastic connectors are mounted in the upper region on one of the frontal sides (seen in length direction) of the fuel cell module via specifically designed, but not further described, fuel cell mounts that are part of the cross member. These fuel cell mounts may comprise mounting plates to enable a screw connection or may clamp to the fuel cell elastic connectors as part of an integrated structure in the cross member. At the other side of the fuel cell module elastic connectors 401 may be directly mounted between the adjacent side walls of the fuel cell module and the longitudinal beams of the chassis, either on the inside of the U-shaped beam or beneath the chassis beams (as indicated by Figures 10B and 10C). The latter mounting method may be preferred for reasons of ease of assembly (in the factory) when the fuel cell modules need to be inserted and connected to the chassis beams from below. The upper and lower flanges of the U-shaped beam may hinder the accessibility for tools to tighten the fuel cell elastic connectors to the vertical side walls of the chassis beams inside the U-profile. Similar to the construction of the connection of the fuel cell module to the central cross beam also for the connection to the chassis beams specifically designed fuel cell mounts may be applied. When the elastic connectors are being connected below the chassis beams, the vertical location of these elastic connectors may approximately coincide with the location of the center of gravity of the fuel cell module. The eigenfrequencies of roll and pitch may be tuned to a desired low value below the primary frequencies of the axles in this particular case by reducing the distance between the elastic connectors in longitudinal direction Sx. This automatically lowers the eigenfrequency of the pitch mode (for reference see equations 4 and 5). This distance in longitudinal direction Sx can even be further lowered when also the other two elastic connectors would be positioned below the longitudinal beams of the chassis and being attached to the fuel cell side walls (parallel to the driving direction of the vehicle) of the fuel cell module.

Figure 10B shows a side view at the chassis with the middle fuel cell modules 302 and 303 connected via upper elastic connectors 400 and lower elastic connectors 401. Furthermore it is stipulated that alternatively also fuel cell

modules may be positioned in the front end (above the front axle as indicated by region F in Figure 10 (A) of the chassis between the longitudinal beams and being mounted via elastic connectors according to one of the proposed connecting positions of the bushings and using specifically designed fuel cell mount elements.

Figures 10C1 and 10C2 show generic setups of fuel cell modules 300, 301, 302 and 303 in perspective view having mounting points for various locations of the elastic connectors 400, 401 at the different side walls and vertical locations of the fuel cell module frame. It is noted that the fuel cell modules are mounted mechanically uncoupled from each other. Exemplary embodiments may be provided with the fuel cell module being a rectangular box with a width dimension in lateral direction ranging between 400 and 800 mm, a length dimension along the longitudinal beams ranging between 600 and 1200 mm, and a weight ranging between 200 and 500 kg. The elastic connectors may have a longitudinal and lateral stiffness ranging between 500 and 3000 N/mm, and wherein a axial vertical stiffness ranging between 50 and 200 N/mm.

Without limiting the scope of the invention, in a practical embodiment the main geometrical dimensions of the two fuel cell boxes with flexible mounts 400 attached to the opposing vertical planes (perpendicular to the horizontal x-axis of the vehicle) may be as follows:

M = 320 kg; Sx = 1040 mm; Sy = 450 mm; R = 250 mm
Ix,0 = 22 $kgm^2$; Iy,0 = 32 $kgm^2$; Iz,0 = 29 $kgm^2$;
Ix,S = 42 $kgm^2$; Iy,S = 52 $kgm^2$; Iz,S = 29 $kgm^2$;
Cx = 1000 N/mm; Cy = 1000 N/mm; Cz = 100 N/mm;
Lx = 20250 Nm/rad; Ly = 108160 Nm/rad; Lz = 1284100 Nm/rad;

The table underneath summarizes the resulting eigenfrequencies of the six eigenmodes of the fuel cell box via a comparison of a fuel cell system with the mounts coinciding in the plane of the center of gravity (R = 0 mm) versus the proposed solution with an off-setted center of gravity (R = 250 mm) below this mounting plane:

| | R [mm] 0 | R [mm] 250 |
|---|---|---|
| | **f [Hz]** | **f [Hz]** |
| Heave (z) | 5,63 | 5,63 |
| Roll (x) | 4,81 | 3,49 |
| Pitch (y) | 9,31 | 7,29 |
| Longitudinal (x) | 17,79 | 17,79 |
| Lateral (y) | 17,79 | 17,79 |
| Yaw (z) | 33,33 | 33,33 |

Design target for placing frequencies:

< 9 Hz

> 16 Hz

***Table 1** Overview of the resulting eigenfrequencies (comparison with and without off-setted center of gravity)*

This table clearly demonstrates that only the low frequent roll and pitch modes are affected by offsetting the center of gravity of the fuel cell box substantially below the plane in which the four elastic mounts are positioned (according to the description of Figure 5). In particular, it is shown that the fuel cell module may be suspended with heave, roll and pitch eigenfrequencies that are lower than the primary eigenfrequency which is typically situated in the 9 to 16 Hz frequency range for heavy duty commercial vehicles.

The table also shows that the eigenfrequency of the roll mode may already be in a safe region of ca. 5 Hz (similar to the carefully designed heave mode that is tuned to 5,6 Hz via a properly selected vertical spring stiffness Cz = 100 N/mm of the elastic mounts) without off-setting the center of gravity. This is explained by the fact the width between the fuel cell mounts in lateral direction sy is relatively small. Lowering the center of gravity may further reduce the acceleration levels of the fuel cell box in this way but may also give rise to large roll oscillations related to this softly sprung and poorly damped roll mode. In practice these excessive roll motions need to be limited via bump stops with progressive stiffness characteristics and/or the addition of a lateral spring-damper unit attached to the bottom of the fuel cell box in order to avoid unforeseen collisions of the swaying fuel cell module with other vehicle construction parts (as explained in the description of Figure 9).

The table further shows that the eigenfrequency of the pitch mode for the non-offsetted center of gravity (R = 0 mm) on the other hand can be located very close to the critical 10 - 15 Hz axle resonance frequency. Vehicle simulations have indicated that this mode causes peak accelerations in the fuel cell system that are larger than 50 $m/s^2$ and should thus be avoided. Apparently the selected base Sx between the mounts (needed for packaging reasons and for avoidance of collision between the two fuel cell boxes when they resonate in longitudinal direction in counter phase) may be too big to

provide a low enough eigenfrequency. By off-setting the center of gravity, this problem is solved and this critical pitch eigenfrequency can be tuned down to a safe 7 Hz value.

While other combinations may be feasible, depending on a specific geometric choice, in principle, the other frequencies will be designed to lie above the primary eigenfrequency range, in this case above 16 Hz, so that the fuel cell is suspended with longitudinal, lateral and yaw eigenfrequencies that are higher than the primary eigenfrequency. Thus, evaluating all frequencies of Table 1 one can conclude that via a well-designed combination of soft vertical springs and stiff horizontal springs in combination with carefully selected bases between the fuel cell mounts and offsetting the center of gravity all six eigenmodes can be positioned in safe non-critical regions of the frequency domain (above and below the primary eigenfrequency) avoiding critical 10 - 15 Hz unsprung axle resonance modes.

It is noted that the final overall tuning of the system will be done and further refined on the basis of vehicle simulations by vehicle tests. The theoretical method described here serves as a guideline to design the main technical measures of the proposed four point suspension concept.

Equations 1 to 9 assume a stiff and static environmental structure regarding the connection of the springs in the four upper corners of the fuel cell box. In reality these connections are part of a bigger flexible vehicle structure which may give rise to partly reduced local effective stiffnesses and interaction with other resonance frequencies of further major subsystems that may need to be avoided as well. Furthermore, also the fuel cell box itself may not be an infinitely stiff substructure. As a matter of fact it is composed of many relatively heavy subcomponents, like the fuel cell stack, and air compressor, water pumps, ion exchanger, etc. that are interconnected via a subframe partly consisting of reinforcement beams and/or supportive sheet metal plates. Moreover fuel cell system subcomponents that are extremely vulnerable to vibrations might even have their own flexible vibration absorption mounts. In this analysis the fuel cell box has been assumed as a rigid body with an homogeneous distribution of the mass material. All these practical realization aspects may result in small deviations from the proposed tuning of the main parameters of the flexible mounts (regarding stiffness characteristics and positioning of the elastic connectors at the fuel cell module). Nevertheless the claimed method and embodiments of this invention provide a principal solution to keep the fuel cell module peak accelerations below 5g [$m/s^2$] under normal and severe driving conditions.

It will be clear to the skilled person that the invention is not limited to any embodiment herein described and that modifications are possible which may be considered within the scope of the appended claims.

## Claims

1. A truck or tractor semi-trailer combination interconnected via a fifth wheel, comprising a chassis (100) formed by at least two elongate beams (150) along a length of the truck, said chassis forming a suspension mount for a suspension system (200) that connects to an unsprung mass including an axle and wheels, said unsprung mass having a primary eigenfrequency mode impacting the chassis, wherein the at least two elongate beams (150) are coupled by at least a cross beam (160) extending laterally along the truck, the cross beam forming a first fuel cell mount position, said chassis further comprising one or more additional fuel cell mounts (170, 171, 172), arranged to carry said fuel cell module (300, 301) having elastic connectors (400) provided on the fuel cell module, to connect to said fuel cell mounts respectively,
   **characterized in that**

   the elastic connectors have an axial stiffness, in the vertical direction of gravity, that is lower than a longitudinal and/or lateral stiffness, wherein
   a ratio of the lateral stiffness and the axial stiffness is more than 5, for thereby elastically suspending the fuel cell module with a heave, pitch and roll eigenfrequency that is tuned to be distinct of the primary eigenfrequency.

2. A truck according to claim 1, wherein the fuel cell module is mounted with a center of gravity vertically distanced from a plane including at least two elastic connectors, to reduce the fuel cell module's pitch and roll eigenfrequency, wherein the center of gravity is vertically distanced at 100 to 500 mm.

3. A truck according to any preceding claim, wherein the fuel cell module is suspended with heave, roll and pitch eigenfrequencies that are lower than the primary eigenfrequency, and
   wherein the fuel cell is suspended with longitudinal, lateral and yaw eigenfrequencies that are higher than the primary eigenfrequency.

4. A truck according to any of said previous claims, wherein said first and second fuel cell mounts comprise mount arms that extend sideways of the two elongate beams to mount said fuel cell module laterally extending sideways of the chassis.

**5.** A truck according to any of said previous claims, wherein two or more fuel cell modules are mounted mechanically uncoupled from each other.

**6.** A truck according to any of said previous claims, wherein the primary eigenfrequency ranges between 9 and 16 Hz.

**7.** A truck according to any of said previous claims, wherein the elastic connectors mounted to the fuel cell module having a longitudinal interdistance adapted to reduce a pitch frequency below the primary eigenfrequency.

**8.** A truck according to any of said previous claims, wherein the elastic connectors are mounted to the fuel cell module having a lateral interdistance adapted to reduce a roll frequency below the primary eigenfrequency.

**9.** A truck according to any of said previous claims, wherein the fuel cell module is contained in a rectangular box with a width dimension in lateral direction ranging between 400 and 800 mm, a length dimension along the longitudinal chassis beams ranging between 600 and 1200 mm, and a weight ranging between 200 and 500 kg.

**10.** A truck according to any of said previous claims, wherein the elastic connectors have a lateral and longitudinal stiffness ranging between 500 and 3000 N/mm, and an axial vertical stiffness ranging between 50 and 200 N/mm.

**11.** A truck according to any of the previous claims, wherein the elastic connectors are each provided as a first mount piece that is centrally comprised in an elastic body pressed into a bushing, said bushing housed in a second mount piece, said first and second mount pieces connecting the fuel cell module to the fuel cell mounts provided on the chassis, wherein the first mount piece is a cylindrical core provided with a stopper flange that abuts against the elastic body and the bushing when fully compressed or expanded.

**12.** A truck according to claim 11, wherein the elastic body is asymmetrically designed along its axial length to provide for a symmetrical neutral position when loaded by the fuel cell module.

**13.** A truck according to any of claims 11-12 wherein the elastic body is formed to have excess material bulging out of the bushing to abut the stopper flange causing a progressive increase of axial force, and
wherein the elastic connector has a working stroke ranging between 15 mm and 30 mm.

**14.** A truck according to any previous claim wherein flexible interfacing hoses and cables are connected between the chassis and the fuel cell module with supportive connectors at each side arranged in a horizontal plane including at least two elastic connectors.

**15.** A truck according to any previous claim wherein elastic connectors are provided at one or more side walls of the fuel cell module at different height positions.

## Patentansprüche

**1.** Lastkraftwagen- oder Traktor-Sattelzugkombination, die über eine Sattelkupplung miteinander verbunden sind, umfassend ein Fahrgestell (100), das aus mindestens zwei länglichen Trägern (150) entlang einer Länge des Lastkraftwagens gebildet ist, wobei das Fahrgestell eine Aufhängungshalterung für ein Aufhängungssystem (200) bildet, das mit einer ungefederten Masse verbunden ist, einschließlich einer Achse und Rädern, wobei diese ungefederte Masse einen primären Eigenfrequenzmodus aufweist, der sich auf das Fahrgestell auswirkt, wobei die mindestens zwei länglichen Träger (150) mittels mindestens einem Kreuzträger (160) verbunden sind, der sich seitlich entlang des Lastkraftwagens erstreckt, wobei der Kreuzträger eine erste Brennstoffzellenhalterungsposition bildet, wobei das Fahrgestell weiter einen oder mehrere zusätzliche Brennstoffzellenhalterungen (170, 171, 172) aufweist, die dazu angebracht sind, das Brennstoffzellenmodul (300, 301) zu tragen und elastische Verbinder (400) auf dem Brennstoffzellenmodul aufweisen, um die Brennstoffzellenhalterungen jeweils zu verbinden, **dadurch gekennzeichnet, dass** die elastischen Verbinder in der Richtung vertikal zur Schwerkraft eine axiale Steifheit aufweisen, die geringer ist als eine longitudinale und/oder laterale Steifheit,
wobei ein Verhältnis der lateralen Steifheit und der axialen Steifheit mehr als 5 beträgt, um dadurch das Brennstoffzellenmodul elastisch mit einer Eigenfrequenz für Translations-, Nick- und Rollbewegungen aufzuhängen, die so abgestimmt ist, dass sie sich von der primären Eigenfrequenz unterscheidet.

**2.** Lastkraftwagen nach Anspruch 1, wobei das Brennstoffzellenmodul mit einem Schwerpunkt vertikal beabstandet zu

einer Ebene montiert ist, die mindestens zwei elastische Verbinder umfasst, um die Nick- und Rolleigenfrequenz des Brennstoffzellenmoduls zu reduzieren,
wobei der Schwerpunkt vertikal bei 100 bis 500 mm beabstandet ist.

**3.** Lastkraftwagen nach einem der vorhergehenden Ansprüche, wobei das Brennstoffzellenmodul aufgehängt ist mit Translations-, Roll- und Nickeigenfrequenzen, die niedriger sind als die primäre Eigenfrequenz, und wobei die Brennstoffzelle mit longitudinalen, lateralen und Giereigenfrequenzen aufgehängt ist, die höher sind als die primäre Eigenfrequenz.

**4.** Lastkraftwagen nach einem der vorhergehenden Ansprüche, wobei die erste und zweite Brennstoffzellenhalterung Haltearme umfassen, die sich seitlich von den beiden länglichen Trägern erstrecken, um das Brennstoffzellenmodul seitlich vom Fahrgestell ausgehend zu befestigen.

**5.** Lastkraftwagen nach einem der vorhergehenden Ansprüche, wobei zwei oder mehr Brennstoffzellenmodule mechanisch voneinander entkoppelt montiert sind.

**6.** Lastkraftwagen nach einem der vorhergehenden Ansprüche, wobei die primäre Eigenfrequenz zwischen 9 und 16 Hz liegt.

**7.** Lastkraftwagen nach einem der vorhergehenden Ansprüche, wobei die elastischen Verbinder, die an dem Brennstoffzellenmodul montiert sind, einen Längsabstand aufweisen, der so ausgelegt ist, dass er die Nickfrequenz unter die primäre Eigenfrequenz reduziert.

**8.** Lastkraftwagen nach einem der vorhergehenden Ansprüche, wobei die elastischen Verbinder, die an dem Brennstoffzellenmodul montiert sind, einen lateralen Abstand aufweisen, der so ausgelegt ist, dass er die Rollfrequenz unter die primäre Eigenfrequenz reduziert.

**9.** Lastkraftwagen nach einem der vorhergehenden Ansprüche, wobei sich das Brennstoffzellenmodul in einem rechteckigen Kasten befindet, der eine Breitenabmessung in lateraler Richtung zwischen 400 und 800 mm, eine Längenabmessung entlang der Längsträger des Fahrgestells zwischen 600 und 1200 mm und ein Gewicht zwischen 200 und 500 kg aufweist.

**10.** Lastkraftwagen nach einem der vorhergehenden Ansprüche, wobei die elastischen Verbinder eine laterale und longitudinale Steifheit zwischen 500 und 3000 N/mm und eine axiale vertikale Steifheit zwischen 50 und 200 N/mm aufweisen.

**11.** Lastkraftwagen nach einem der vorhergehenden Ansprüche, wobei die elastischen Verbinder jeweils als ein erstes Montagestück bereitgestellt sind, das sich zentral in einem elastischen Körper befindet, der in eine Buchse eingepresst ist, wobei die Buchse sich in einem zweiten Montagestück befindet, wobei das erste und das zweite Montagestück das Brennstoffzellenmodul mit den Brennstoffzellenhalterungen, die an dem Fahrgestell bereitgestellt sind, verbinden,
wobei das erste Montagestück ein zylindrischer Kern ist, der mit einem Anschlagflansch versehen ist, der an dem elastischen Körper und an der Buchse anliegt, wenn er vollständig zusammengedrückt oder entfaltet ist.

**12.** Lastkraftwagen nach Anspruch 11, wobei der elastische Körper entlang seiner axialen Länge asymmetrisch ausgebildet ist, um eine symmetrische neutrale Position zu schaffen, wenn er von dem Brennstoffzellenmodul belastet wird.

**13.** Lastkraftwagen nach einem der Ansprüche 11 bis 12, wobei der elastische Körper so ausgebildet ist, dass überschüssiges Material aus der Buchse herausragt, um an den Anschlagflansch anzustoßen, wodurch eine progressive Zunahme der Axialkraft verursacht wird und
wobei der elastische Verbinder einen Arbeitshub zwischen 15 und 30 mm aufweist.

**14.** Lastkraftwagen nach einem der vorhergehenden Ansprüche, wobei flexible Verbindungsschläuche und -kabel zwischen dem Fahrgestell und dem Brennstoffzellenmodul stützenden Verbindern auf jeder Seite verbunden sind, die in einer horizontalen Ebene angeordnet sind und mindestens zwei elastische Verbinder umfassen.

**15.** Lastkraftwagen nach einem der vorhergehenden Ansprüche, wobei elastische Verbinder an einer oder mehreren

Seitenwänden des Brennstoffzellenmoduls an verschiedenen Höhenpositionen bereitgestellt sind.

## Revendications

1. Ensemble camion ou tracteur semi-remorque interconnecté par une cinquième roue, comprenant un châssis (100) formé par au moins deux poutres allongées (150) sur une longueur du camion, ledit châssis formant un support de suspension pour un système de suspension (200) qui se connecte à une masse non suspendue comprenant un essieu et des roues, ladite masse non suspendue ayant un mode de fréquence propre primaire ayant un impact sur le châssis, dans lequel les au moins deux poutres allongées (150) sont couplées par au moins une traverse (160) s'étendant latéralement le long du camion, la traverse formant une première position de support de pile à combustible, ledit châssis comprenant en outre un ou plusieurs autres supports de pile à combustible (170, 171, 172), agencés pour porter ledit module de pile à combustible (300, 301) ayant des connecteurs élastiques (400) fournis sur le module de pile à combustible, pour se connecter respectivement auxdits supports de pile à combustible,

   **caractérisé en ce que** les connecteurs élastiques ont une rigidité axiale, dans la direction verticale de la gravité, qui est inférieure à une rigidité longitudinale et/ou latérale,
   dans lequel le rapport entre la rigiditélatérale et la rigidité axiale est supérieur à 5, afin de suspendre ainsi élastiquement le module de pile à combustible avec une fréquence propre de pilonnement, de tangage et de roulis qui est réglée de manière à être distincte de la fréquence propre primaire.

2. Camion selon la revendication 1, dans lequel le module de pile à combustible est monté avec un centre de gravité éloigné verticalement d'un plan comprenant au moins deux connecteurs élastiques, afin de réduire la fréquence propre de tangage et de roulis du module de pile à combustible,
   dans lequel le centre de gravité est éloigné verticalement de 100 à 500 mm.

3. Camion selon l'une quelconque des revendications précédentes, dans lequel le module de pile à combustible est suspendu avec des fréquences propres de pilonnement, de roulis et de tangage qui sont inférieures à la fréquence propre primaire, et
   dans lequel la pile à combustible est suspendue avec des fréquences propres longitudinales, latérales et de lacet supérieures à la fréquence propre primaire.

4. Camion selon l'une quelconque des revendications précédentes, dans lequel lesdits premier et second supports de pile à combustible comprennent des bras de montage qui s'étendent sur les côtés des deux poutres allongées pour monter le module de pile à combustible s'étendant sur les côtés du châssis.

5. Camion selon l'une quelconque des revendications précédentes, dans lequel deux modules de pile à combustible ou plus sont montés mécaniquement découplés les uns des autres.

6. Camion selon l'une quelconque des revendications précédentes, dans lequel la fréquence propre primaire est comprise entre 9 et 16 Hz.

7. Camion selon l'une quelconque des revendications précédentes, dans lequel les connecteurs élastiques montés sur le module de pile à combustible ont une interdistance longitudinale adaptée pour réduire une fréquence de tangage en dessous de la fréquence propre primaire.

8. Camion selon l'une quelconque des revendications précédentes, dans lequel les connecteurs élastiques sont montés sur le module de pile à combustible et ont une interdistance latérale adaptée pour réduire une fréquence de roulis en dessous de la fréquence propre primaire.

9. Camion selon l'une quelconque des revendications précédentes, dans lequel le module de pile à combustible est contenu dans un boîtier rectangulaire dont une dimension de largeur dans la direction latérale est comprise entre 400 et 800 mm, une dimension de longueur le long des poutres longitudinales du châssis est comprise entre 600 et 1 200 mm, et un poids est compris entre 200 et 500 kg.

10. Camion selon l'une quelconque des revendications précédentes, dans lequel les connecteurs élastiques ont une rigidité latérale et longitudinale comprise entre 500 et 3 000 N/mm, et une rigidité verticale axiale comprise entre 50 et 200 N/mm.

**11.** Camion selon l'une quelconque des revendications précédentes, dans lequel les connecteurs élastiques se présentent chacun sous la forme d'une première pièce de montage qui est centrée dans un corps élastique pressé dans une douille, ladite douille étant logée dans une seconde pièce de montage, lesdites première et seconde pièces de montage reliant le module de pile à combustible aux supports de pile à combustible prévus sur le châssis, dans lequel la première pièce de montage est un noyau cylindrique pourvu d'une bride de butée qui vient en butée contre le corps élastique et la douille lorsqu'elle est complètement comprimée ou dilatée.

**12.** Camion selon la revendication 11, dans lequel le corps élastique est asymétrique sur sa longueur axiale afin d'assurer une position neutre symétrique lorsqu'il est chargé par le module de pile à combustible.

**13.** Camion selon l'une quelconque des revendications 11 et 12, dans lequel le corps élastique est formé de sorte qu'un excès de matière dépasse de la douille pour venir en butée contre la bride de butée, entraînant une augmentation progressive de la force axiale, et
dans lequel le connecteur élastique a une course de travail comprise entre 15 mm et 30 mm.

**14.** Camion selon l'une quelconque des revendications précédentes, dans lequel des tuyaux et des câbles d'interface flexibles sont reliés entre le châssis et le module de pile à combustible par des connecteurs de soutien disposés de chaque côté dans un plan horizontal comprenant au moins deux connecteurs élastiques.

**15.** Camion selon l'une quelconque des revendications précédentes, dans lequel des connecteurs élastiques sont prévus sur une ou plusieurs parois latérales du module de pile à combustible, à différentes hauteurs.

200
150
100
160
150
300
200
300

FIG 1A

100
300
300
200

FIG 1B

Acc, FT-XF7S-BEV-v03frf, dafpave1998-t, 50 Km/h, dir: 3
id:#Afa1-axle-l, rms: 28.1
id:#Afa1-axle-l, rms: 27
front axle
rear axle
PSD [m²/s⁴/Hz]
300
250
200
150
100
50
0
0
5
10
15
20
25
30
*** psd_meanspeed ***
frequency [Hz]

FIG. 2

100
160
171
300
400
170
400
172
301

FIG 3

Cx = 2000 N/mm; Fx = 2700 N; Δx = 1,4 mm
Cy = 2000 N/mm; Fy = 1800 N; Δy = 0,9 mm
Cz = 200 N/mm; Fz = 2790 N; Δz = 14,0 mm
Cx = 1000 N/mm; Fx = 1350 N; Δx = 1,5 mm
Cy = 1000 N/mm; Fy = 900 N; Δy = 0,9 mm
Cz = 100 N/mm; Fz = 2250 N; Δz = 22,5 mm
450
300
400
171
170
S
150
x
y
z

FIG. 4B

$C_x$ = 1000 N/mm
$C_y$ = 1000 N/mm
$C_z$ = 100 N/mm

400
300
170
400
300
400
171
S
S
172

FIG. 4A

pivot line y
$s_y$
S
$C_z$
$C_y$
400
$C_x$
R
M,I
Z
X
Y
$s_x$
pivot line x
300

FIG. 5A

s
2 x $C_z$
400
y
S
2 x $C_y$
R
φ
M, $I_0$
300

FIG. 5B

440
461
460
462
470
450

FIG. 6B

FIG. 6A

452
452
451
453
462
400
471
450
462

FIG. 7B

FIG. 7A

Dynamic forces acting on bushings in z-direction during a Pave road drive
Force [N]
2000
1800 N
1500
1000
500
0 N
-500
-1000
-1500
-1800 N
-2000
-2500
0
20
40
60
80
100
120
140
160
time [s]
$P_1$
$P_0$
$P_1$

FIG. 8A

Maximum deflections until bump stop fully compressed
22 mm
22 mm
452'
452'
P3
P2
P1
P0
Progressive bump stop characteristic
462'
Peak loads (+ 30 %)
bump stop stroke = ca. 5 mm
Δ = 2400 N (potholes)
Δ = 1800 N (Pave)
Cz = 100 N/mm (linear)
3200 N
2600 N
800 N
Force [N]
3500
3000
2500
2000
1500
1000
500
0
0
5,00
10,00
15,00
20,00
25,00
35,00
8 mm
30 mm
Deflection [mm]
Static load acting on bushing (kerb weight position)


FIG. 8B

452
462
471
452
5
22
5
22

FIG. 8C

400
170
500
100
FC1
300
A
A
X
160
FC2
301
B
B

FIG 9A

Preferred location and orientation of interfacing hoses and cables to FC modules
A-A
(cross section FC1)
600
100
S
Max. bushing compression = +/- 22mm
$C_1$
170
500
$C_2$
300
+5°
-5°
300
Views from below
300
500
$C_1$
$C_2$
Clearance to leaf spring shackle = 7,7mm
Clearance to side skirt = 10,0mm
170
170
Preferred location and orientation of interfacing hoses and cables to FC modules
B-B
(cross section FC2)
601
S
Max. bushing compression = +/- 22mm
100
500
301
$C_3$
+5°
-5°
301
View from below
$C_3$
500
Clearance to side skirt = 9,5mm

FIG. 9B1

FIG. 9B2

F
100
161
171
401
302
300
400
X
150
170
160
400
303
301
162
172

FIG. 10A

150
X
400
401
302
303
401

FIG 10B

300, 302
350
351
400
401
301, 303

FIG 10C1

FIG 10C2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 10493837 B
- EP 3616956 A